Europäisches Patentamt

(19) ))) European Patent Office

Office européen des brevets

(11) Publication number: **0 177 192**

**A2**

(12) # EUROPEAN PATENT APPLICATION

(21) Application number: **85306282.6**

(22) Date of filing: **04.09.85**

(51) Int. Cl.⁴: **C 08 G 18/62**

(30) Priority: **27.09.84 US 654903**
**27.09.84 US 654904**

(43) Date of publication of application:
**09.04.86 Bulletin 86/15**

(84) Designated Contracting States:
**BE DE FR GB IT**

(71) Applicant: **TEXACO DEVELOPMENT CORPORATION**
**2000 Westchester Avenue**
**White Plains New York 10650(US)**

(72) Inventor: **Cuscurida, Michael**
**3543 Greyston, 1056**
**Austin Texas 78731(US)**

(72) Inventor: **Yeakey, Ernest Leon**
**6316 Gato Path**
**Austin Texas 78731(US)**

(72) Inventor: **Peterson, Bruce William**
**8524 Burnett Road 712**
**Austin Texas 78758(US)**

(74) Representative: **Brock, Peter William et al,**
**Michael Burnside & Partners 2 Serjeants' Inn Fleet Street**
**London EC4Y 1HL(GB)**

(54) Vinyl polymer polyols and polyurethane foams made therefrom.

(57) Polyurethane plastics, including foams, made from polyisocyanates and polymer polyols exhibit enhanced load-bearing properties and reduced polymer loadings when the polymer polyol is a simple polymer polyol prepared by polymerizing at least one vinyl monomer in the presence of an epoxy resin-modified polyol via a free-radical reaction. An especially suitable epoxy resin-modified polyol is one in which an initiator is reacted with an alkylene oxide and epoxy resin in such a way that the epoxy resin is added internally along the length of an alkylene oxide chain.

Croydon Printing Company Ltd

# VINYL POLYMER POLYOLS AND POLYURETHANE
## FOAMS MADE THEREFROM

This invention relates to polyurethane plastics more particularly relates to polyurethanes made using dispersions of polymers made from various vinyl monomers in the presence of polyols as the dispersing media, and to the polymer dispersions themselves.

It is well known to use a polyol in the preparation of polyurethanes by reaction of the polyol with a polyisocyanate in the presence of a catalyst, and perhaps other ingredients. Conventional polyols for flexible polyurethane foams are usually made by the reaction of a polyhydric alcohol with an alkylene oxide, usually ethylene oxide and/or propylene oxide, to give a product with a molecular weight of 2000 to 3000, or higher. These polyols are then reacted with polyisocyanate in the presence of water, or other blowing agents such as fluorocarbons, to obtain polyurethane foams. Polyols have been modified in many ways in attempts to improve the properties of the resulting polyurethane.

One common method of modifying polyols involves the use of polymers as a dispersed phase. One type is made by polymerizing vinyl monomers, such as acrylonitrile and styrene, in polyols. Another type is made by polymerization of vinyl monomers in polyol-isocyanate addition products. Another type involves the preparation of polyurea polymers by the reaction of diamines with diisocyanates in a polyol.

For example, US-A-3 008 917 teaches adding an unsaturated liquid monomer, such as styrene, to a polyester-isocyanate adduct which itself contains vinyl unsaturation. The resulting mixture is then copolymerized through the unsaturated linkages. US-A-3 304 273 discloses a polymer polyol made by mixing a minor amount of a film-forming polymer, having groups reactive with the -NCO groups of an organic polyisocyanate (such as polymers of acrylic acid, allyl alcohol, styrene, or butadiene), with a major amount of a solvent which also contains groups reactive with an isocyanate group but which has little or no ethylenic unsaturation (such as a polyol). Similar polymer polyols, where the dispersed polymers consist of polymerized unsaturated monomers, such as methacrylonitrile, or styrene, particularly copolymers using more than one kind of unsaturated monomer, are disclosed in US-A-3 383 351. These materials are useful in preparation of polyurethane products.

US-A-4 104 236 reveals a liquid polymer polyol composition containing 45 to 90 wt% of a polyoxypropylene polyol having a molecular weight of at least 1500, and 55 to 10 wt% of a polymer. The polymer consists of 60 to 90 wt% of polymerized acrylonitrile and 40 to 10 wt% of polymerized styrene. Polyurethane foams having high load-bearing properties, and solid polyurethane elastomers having a high modulus, were made from these materials. A polymer polyol consisting of 45 to 95 wt% of a poly(oxy-propyleneoxyethylene) polyol having a hydroxyl number of 20 to 60, an oxyethylene cap of 10 to 30 wt% and an internal oxyethylene content of 5 to 60 wt%, and from 5 to 60 wt% of a polymerized vinyl monomer (such as a copolymer of styrene and acrylonitrile) is taught in US-A-4 125 505. Further, US-A-4 148 840 discloses polymer polyol compositions made by polymerizing one or more ethylenically unsaturated monomers in a polyol.

High resilience urethane foams may be prepared from tolylene diisocyanate and novel polymer polyol compositions made with acrylonitrile and vinylidene chloride monomers according to US-A-4 214 055. The acrylonitrile-vinylidene chloride polymer polyol compositions apparently enhance the load-bearing properties and decrease the flammability of the resultant foams. US-A-4 226 756 teaches that polyol/vinyl polymer blends, made by polymerizing acrylonitrile, styrene and/or methyl methacrylate in the presence of polyethylene-polypropylene glycols, are useful in producing polyurethanes. Polymer stabilizers made by polymerizing 30:70 acrylonitrile-styrene mixtures with polypropylene glycol monobutyl ether methacrylate are disclosed in US-A-4 242 249 as useful stabilizers for polyol-vinyl monomer reaction products.

US-A-3 325 421 describes polyurea polymer polyols made by reaction of diamines with diisocyanate using a polyol as the dispersing medium. GB-A-899 413 discloses the emulsion polymerization of vinyl monomers in a suspending agent which is itself made by condensing polyethylene glycol with the diglycidyl ether of bisphenol A.

The polyols found to be useful as dispersing media in this invention are polyols modified with epoxy resins. Generally, a polyepoxide is added during the reaction of a polyol initiator with mixtures of alkylene oxides, before the alkylene oxide addition is complete. For example, see US-A-4 316 991 and -4 373 034.

The present invention concerns vinyl polymer polyols prepared by polymerizing, via a free-radical reaction, a vinyl monomer component having at least one vinyl monomer in the presence of an epoxy-resin modified polyol having a molecular weight of 2,000 to 7,000. The invention also concerns polyurethane foam made by reacting the vinyl polymer with an organic polyisocyanate in the presence of a polyurethane catalyst and optionally in the presence of a blowing agent.

Polymer polyols are typically prepared by the free-radical catalyzed polymerization of vinyl monomers, using various polyols as dispersing media. These polymer polyols have been used to enhance the load-bearing properties of molded high resilience foam used in automotive seating, and slab flexible foam used in carpet underlay.

It has been discovered that the preparation of vinyl polymer polyols by the free radical-initiated polymerization of vinyl monomers in epoxy resin-modified polyols as reaction media gives polymer polyols which are more effective than conventional polymer polyols in increasing the load-bearing properties of polyurethane flexible foams. In addition, firmer polyurethane foams using polymer polyols with lower polymer loadings can be produced using the polymer polyols of the invention.

The Reactants

The monomers employed in preparing the vinyl polymer polyols of this invention are polymerizable monomers containing at least one polymerizable ethylenic unsaturated group of the type C=C. The monomers can be used singly or in combination to produce homopolymer/reactive solvent products or copolymer/reactive solvent combinations, respectively.

Preferably, the monomers contain the double bond in a vinyl group. These monomers are well known in the art and include hydrocarbon monomers such as styrene, acrylonitrile, methyl methacrylate, methyl acrylate, butadiene, isoprene, 1,4-pentadiene, 1,6-hexadiene, 1,7-octadiene, $\alpha$-methylstyrene, methyl styrene, 2,4-dimethylstyrene, ethylstyrene, isopropylstyrene, butylstyrene, phenylstyrene, cyclohexylstyrene and benzylstyrene; substituted styrenes such as chlorostyrene, 2,5-dichlorostyrene, bromostyrene, fluorostyrene, trifluoromethyl styrene, iodostyrene, cyanostyrene, nitrostyrene, N,N-dimethylaminostyrene, acetoxystyrene, methyl 4-vinylbenzoate, phenoxystyrene p-vinyldiphenyl sulfide, and p-vinylphenyl oxide. Also suitable are other acrylic and substituted acrylic monomers such as acrylic acid, methacrylic acid, methyl acrylate, 2-hydroxyethyl acrylate, 2-hydroxyethyl methacrylate, cyclohexylmethacrylate, benzyl methacrylate, isopropyl methacrylate, octyl methacrylate, methacrylonitrile, methyl alphachloroacrylate, ethyl $\alpha$-ethoxy acrylate, methyl $\alpha$-acetaminoacrylate, butyl acrylate, 2-ethylhexyl acrylate, phenyl acrylate, phenyl methacrylate, $\alpha$-chloroacrylonitrile, N,N-dimethylacrylamide, N,N-dibenzylacrylamide, N-butylacrylamide, and methacrylyl formamide. Also useful are vinyl compounds, e.g. vinyl esters, vinyl ethers, and vinyl ketones, such as vinyl acetate, vinyl chloroacetate, vinyl alcohol, vinyl butyrate, isopropenyl acetate, vinyl formate, vinyl acrylate, vinyl methacrylate, vinyl methoxy acetate, vinyl benzoate, vinyl iodide, vinyl toluene, vinyl naphthalene, vinyl bromide, vinyl fluoride, vinyldiene bromide, 1-chloro-1-fluoroethylene, vinyldiene fluoride, vinyl methyl ether, vinyl ethyl ether, vinyl propyl ethers, vinyl butyl ethers, vinyl 2-ethylhexyl ether, vinyl phenyl ether, vinyl 2-methoxyethyl ether, methoxybutadiene, vinyl 2-butoxyethyl ether, 3,4-dihydro-1,2-pyran, 2-butoxy-2'-vinyloxy diethyl ether, vinyl 2-ethylmercaptoethyl ether, vinyl methyl ketone, vinyl ethyl ketone, vinyl phenyl ketone, vinyl ethyl sulfide, vinyl ethyl sulfone, N-methyl-N-vinylacetamide, N-vinylpyrrolidone, vinyl imidazole, divinyl sulfide, divinyl sulfone, sodium vinyl sulfoxide, methyl vinyl sulfonate, and N-vinyl pyrrole. Other useful compounds are dimethyl fumarate, dimethyl maleate, maleic acid, crotonic acid, fumaric acid, itaconic acid, monomethyl itaconate, t-butyl aminoethyl methacrylate, dimethylaminoethyl methacrylate, glycidyl acrylate, allyl alcohol, glycol monoesters of itaconic acid, dichlorobutadiene, and vinyl pyridine. Any of the known polymerizable monomers can be used and the compounds listed above are illustrative and not restrictive of the monomers suitable for use in this invention.

Vinyl monomers are preferred, and styrene, acrylonitrile, methyl methacrylate, methyl acetate, and butadiene are particularly preferred. It is especially preferred that styrene and acrylonitrile be used together. The preferred mol ratio of styrene to acrylonitrile ranges from 9:1 to 1:9. Any of the known chain transfer agents can be present, if desired.

Polymerization of the monomers in the epoxy resin-modified polyol solvent occurs in the presence of a catalytically effective amount, preferably 0.1 to 5.0 wt% based on total feed, of a conventional free radical catalyst known to be suitable for the polymerization of ethylenically unsaturated monomers. Preferred catalyst are the azo-bis compounds, such as $\alpha$, $\alpha'$-azo-2-methyl butyronitrile, $\alpha$,$\alpha'$-azo-2-methyl heptonitrile, 1,1'-azo-isobutyrate, 4,4'-azo-4-cyanopentanoic acid, and azobisisobutyronitrile. Other preferred catalysts are organic peroxides, peroxydicarbonates and peroxyesters. Illustrative catalysts are the well-known free radical type of vinyl polymerization catalysts, for example, the peroxides, persulfates, perborates, percarbonates, and azo compounds, including hydrogen peroxide, dibenzoyl peroxide, acetyl peroxide, benzoyl hydroperoxide, t-butyl hydroperoxide, dit-butyl peroxide, lauroyl peroxide, butyryl peroxide, diisopropylbenzene hydroperoxide, cumene hydroperoxide, paramenthane hydroperoxide, diacetyl peroxide, di-alpha-cumyl peroxide, dipropyl peroxide, diisopropyl peroxide, isopropyl-t-butyl peroxide, butyl-t-butyl peroxide, dilauroyl peroxide, difuroyl peroxide, ditriphenylmethyl peroxide, bis(p-methoxybenzoyl) peroxide, p-monomethoxybenzoyl peroxide, rubrene peroxide, ascaridole, t-butyl peroxybenzoate, diethyl peroxyterephthalate, propyl hydroperoxide, isopropyl hydroperoxide, n-butyl hydroperoxide, t-butyl hydroperoxide, cyclohexyl hydroperoxide, trans-decahydronaphthalene hydroperoxide, $\alpha$-methylbenzyl hydroperoxide, tetrahydronaphthalene hydroperoxide, triphenylmethyl hydroperoxide, diphenylmethyl hydroperoxide, persuccinic acid, and diisopropyl peroxy dicarbonate. A mixture of catalysts may also be used.

Especially preferred are polymerization catalysts manufactured by E.I. duPont de Nemours & Co. such as 2,2'-azobis(2,4-dimethylpentanenitrile), 2,2'-azobis(2-methylpropanenitrile), 2,2'-azobis(2-methylbutanenitrile), and 1,1'-azobis(cyanocyclohexane). These products are commercially sold as VAZO ® 52, 64, 67 and 88, respectively.

The polymerization must occur in an epoxy resin-modified polyol as dispersing medium. Preferably, these modified polyols are made by the reaction of a polyol initiator having an active hydrogen functionality of 3 to 8 with one or more alkylene oxides, and an epoxy resin, in such a manner that the epoxy resin is added internally along the length of the polyol chain. This result may be obtained for instance, with a three-step procedure: 1) reacting a polyol initiator with an alkylene oxide, 2) reacting the alkoxylated initiator with an epoxy resin, and 3) reacting the product from step (2) with additional alkylene oxide. The final polyol preferably has a molecular weight in the range of 2000 to 7000.

Suitable polyol initiators include, for example, glycerol, trimethylolpropane, 1,2,6-hexanetriol, pentaerythritol, triethanolamine, ethylenediamine, aminoethylpiperazine, sorbitol, and sucrose, or mixtures thereof. These are mentioned only for purposes of illustration. It is even expected that dihydric initiators may prove to be useful as polyol initiators in this role. For example, ethylene glycol, propylene glycol, diethylene glycol, dipropylene glycol and other diols are expected to be useful under the proper conditions. The alkylene oxides useful in making the modified polyols of this invention are preferably ethylene oxide, propylene oxide and 1,2-butylene oxide. Ethylene oxide and propylene oxide are preferred. More than one oxide may be added to the modified polyol intermediates as deemed necessary by one skilled in the art. The reactions involving the opening of various terminal epoxide groups are catalyzed usually with a basic compound. For instance, common alkaline catalysts normally employed are sodium hydroxide and potassium hydroxide.

It is anticipated that a wide variety of epoxy resins would be useful in making the epoxy resin-modified polyols suitable for the polymer polyols. The vicinal polyepoxide-containing compounds are organic materials having an average of at least 1.8 reactive 1,2-epoxy groups per molecule. The polyepoxide materials can be monomeric or polymeric, saturated or unsaturated, aliphatic, cycloaliphatic, aromatic or heterocyclic, and may be substituted, if desired, with other substituents besides epoxy groups, e.g. hydroxyl groups, ether radicals, aromatic groups, or halogen atoms.  Preferably, the epoxy resin is the diglycidyl ether of bisphenol A.

The epoxy resin-modified polyols used in this invention may be made under conditions of temperature and pressure selected to give a polyol having certain characteristics. Typical conditions are a pressure of around 0.45 MPa and a temperature of 50 to 150$^O$C.  The amount of epoxy resin to be added to the reaction mixture should be such that the epoxy equivalents present are less than half of the hydroxyl functionality equivalents present in the reaction mixture. An excess of epoxy equivalents in relation to the hydroxyl equivalents may cause the epoxy resin to gel by crosslinking with itself.  Other details about the preparation of the epoxy resin-modified polyols useful in this invention may be found in US-A-4 316 991.

## The Reaction Conditions

To obtain the vinyl polymer polyols of this invention, the epoxy resin-modified polyol is preferably added first to the reaction vessel.  It is usually best that the polyol be heated to the reaction temperature before the next step, which is the slow or dropwise addition of a mixture of the vinyl monomer component (which may comprise more than one kind of vinyl monomer) and the free radical initiator.  After the reaction has proceeded for a short time (0.25 to 1.0 hour), volatiles are stripped off by conventional techniques to leave the vinyl polymer polyol product.

The reaction temperature should be 75 to 150$^O$C, preferably 90 to 140$^O$C.  Reaction pressures may range from atmospheric pressure to 0.8 MPa.  When mixed vinyl monomers are used, e.g. styrene and acrylonitrile, the mol ratios should be from 9:1 to 1:9, or preferably 30:70 to 70:30. The amount of polymer in the polyol, also known as "polymer loading", may be from 5 to 50 wt%, preferably from 10 to 40 wt%.  The vinyl polymer polyols of this invention surprisingly give improved polyurethane foams with improved load-bearing properties even at relatively low polymer loadings.

Polyurethane Foam Preparation

It has been discovered that polyurethane foams may be made by reacting the vinyl polymer polyols described above with an organic polyisocyanate in the presence of a polyurethane formation catalyst. A blowing agent, such as a halocarbon (trichlorofluoromethane, for example), water or carbon dioxide may also be present. The polyurethane formation catalysts are typically tin catalysts or tertiary amine compounds. Other additives such as silicone surfactants, etc. may also be present. For more information on preparing polyurethanes, particularly flexible polyurethanes, see US-A-4 338 408; -4 342 687 and -4 381 353. Surprisingly, the foams made using the vinyl polymer polyols described herein have improved load bearing properties. Flexible carpet underlay foam and molded automobile foam, with lower polymer loadings and better load bearing properties, may be prepared using the techniques mentioned herein. These improvements are accomplished with lower levels of polymer polyol, which is a significant advantage in foam manufacture.

The preparation of the vinyl polymer polyols will be further illustrated by the following Examples, which are not intended to limit the invention. The use of the vinyl polymer polyols of this invention in flexible polyurethane foams will also be demonstrated. The advantages over foams made from conventional polyols, conventional epoxy resin-modified polyols and conventional polymer polyols will also be shown.

## EXAMPLE 1

400 g of a 5,000 molecular weight epoxy resin-modified glycerol-based triol were charged into a one-litre three-necked flask equipped with a stirrer, thermometer, dropping funnel, water condenser, and nitrogen source. The polyol was prepared as described in US-A-4 316 991. It had a hydroxyl number of 33.6 mg KOH/g, contained 0.5 wt% of combined diglycidyl ether of bisphenol A (DGEBPA), and had been capped with 12 wt% of ethylene oxide (EO) to contain 76% of primary hydroxyl groups.

Maintaining a nitrogen purge, the polyol was heated to 130$^{\circ}$C. A mixture of 60g of acrylonitrile, 40g of styrene and 5g of 2,2'-azobis(2-methylbutyronitrile) (VAZO 67 made by E.I. duPont de Nemours & Co.) was added dropwise over 40 minutes maintaining the reaction temperature at 128 to 130$^{\circ}$C. The reaction mixture was then digested for 15 minutes and vacuum stripped to a pressure of 650 Pa. The recovered volatiles (5.6g) corresponded to a monomer conversion of 94.4%. The finished product was an off-white viscous dispersion which had the following properties:

| | |
|---|---|
| Acid No, mg KOH/g | 0.013 |
| Hydroxyl No, mg KOH/g | 27.8 |
| Water, wt% | 0.02 |
| Viscosity, Pa.s at 25$^{\circ}$C | 2.592 |
| Appearance | Homogeneous dispersion |

## EXAMPLES 2 AND 3

These examples will illustrate the preparation of polymer polyols using a 3,500 molecular weight epoxy resin-modified polyol as dispersing medium. This polyol is marketed by Texaco Chemical Co. as THANOL $^{\circledR}$ F-3550 polyol, which is made according to the procedures of US-A-4 316 991. The general procedure of Example 1 was used in these experiments. Reaction charges, details of preparation and properties are as follows:

| Example | 2 | 3 |
|---|---|---|
| **Charge** | | |
| THANOL F-3550, g | 900 | 800 |
| Styrene, g | 40 | 80 |
| Acrylonitrile, g | 60 | 120 |
| VAZO 67, g | 10 | 10 |
| **Reaction Details** | | |
| Temperature, °C | 130-134 | 128-132 |
| Monomer addition time, hr | 0.7 | 1.1 |
| Digestion time, hr | 0.25 | 0.25 |
| Monomer conversion, % | 87.5 | 94.6 |
| **Properties** | | |
| Acid No, mg KOH/g | --* | 0.03 |
| Hydroxyl No, mg KOH/g | 39.4 | 39.3 |
| Water, wt% | 0.01 | 0.01 |
| Viscosity, Pa.s at 25°C | 1.136 | 2.384 |
| Appearance | Homogeneous dispersion | |

*Not determined.


## EXAMPLES 4 AND 5

These examples will illustrate the preparation of polymer polyols using a 3,000 molecular weight epoxy resin-modified triol (THANOL F-3050 made by Texaco Chemical Co.) as the dispersing medium. The general procedure of Example 1 was used in these experiments. Reaction charges, details of preparation and properties are as follows:

| Example | 2 | 3 |
|---|---|---|
| **Charge** | | |
| THANOL F-3050, g | 900 | 800 |
| Styrene, g | 40 | 80 |
| Acrylonitrile, g | 60 | 120 |
| VAZO 67, g | 10 | 10 |
| **Reaction Details** | | |
| Temperature, °C | 130-134 | 128-132 |
| Monomer addition time, hr | 0.9 | 1.1 |
| Digestion time, hr | 0.03 | 0.25 |
| Monomer conversion, % | 92 | 97.3 |
| **Properties** | | |
| Acid No, mg KOH/g | 0.03 | 0.016 |
| Hydroxyl No, mg KOH/g | 53.5 | 51.6 |
| Water, wt% | 0.01 | 0.09 |
| Viscosity, Pa.s at 25°C | 1.430 | 2.584 |
| Appearance | Homogeneous dispersion | |

## EXAMPLE 6

This example will show the preparation of a polymer using a 45.4 hydroxyl number sucrose/glycerol-initiated, DGEBPA-modified polyol in the dispersing medium. This polyol had a propylene oxide/ethylene oxide ratio of 80.8:19.2 and contained 0.5 wt% of combined DGEBPA. The general procedure of Example 1 was used for preparation of this polymer polyol. Reaction charges, details of preparation and properties are shown in the following table:

| | |
|---|---|
| Mixed initiator polyol, g | 800 |
| Styrene, g | 80 |
| Acrylonitrile, g | 120 |
| VAZO 67, g | 10 |
| Reaction Details | |
| Temperature, $^{O}C$ | 128-133 |
| Monomer addition time, hr | 1.0 |
| Digestion time, hr | 0.3 |
| Monomer conversion, % | 93.9 |
| Properties | |
| Hydroxyl No, mg KOH/g | 38.6 |
| Water, wt% | 0.01 |
| Viscosity, Pa.s at 25$^{O}$C | 2.810 |
| Appearance | Homogeneous dispersion |

## EXAMPLE 7

This example will show the use of the polymer polyols of this invention in the preparation of the flexible polyurethane foam of this invention. It will further show the improved load bearing properties (as measured with a Chatillon gauge) of these foams as compared to those made from prior art polyols. In these formulations, the tin level was adjusted to make all foams with the same degree of openess.

Formulations and foam properties are shown in the following table:

| Foam No. | | A | B | C | D | E | F | G |
|---|---|---|---|---|---|---|---|---|
| **Formulation, pbw** | | | | | | | | |
| THANOL F-3016[a] | | 100 | - | - | 50 | 50 | 50 | 50 |
| THANOL F-3050[b] | | - | - | 100 | - | - | - | - |
| THANOL F-3550[c] | | - | 100 | - | - | - | - | - |
| THANOL F-3050 (10% polymer)[d] | | - | - | - | 50 | - | - | - |
| THANOL F-3550 (10% polymer)[e] | | - | - | - | - | 50 | - | - |
| THANOL F-3050 (20% polymer)[f] | | - | - | - | - | - | 50 | - |
| THANOL F-3550 (20% polymer)[g] | | - | - | - | - | - | - | 50 |
| Water | | 3.5 | 3.5 | 3.5 | 3.5 | 3.5 | 3.5 | 3.5 |
| L-711 Silicone[h] | | 1.0 | 1.0 | 1.0 | 1.0 | 1.0 | 1.0 | 1.0 |
| NIAX A-200 catalyst[i] | | 0.35 | 0.35 | 0.35 | 0.35 | 0.35 | 0.35 | 0.35 |
| T-10 Catalyst[j] | | 0.38 | 0.30 | 0.27 | 0.27 | 0.27 | 0.27 | 0.27 |
| Toluene diisocyanate | | 45.2 | 46.1 | 46.8 | 46.8 | 45.4 | 46.4 | 45.4 |
| Isocyanate index | | 1.1 | 1.1 | 1.1 | 1.1 | 1.1 | 1.1 | 1.1 |
| **Properties** | | | | | | | | |
| Density, $kg/m^3$ | | 26.6 | 26.75 | 26.75 | 27.55 | 27.9 | 28.0 | 26.9 |
| Chatillon gauge reading[k] | a) | 4.31 | 4.55 | 4.48 | 4.64 | 4.65 | 4.98 | 4.94 |
| (25% indentation) | b) | 1.96 | 2.07 | 2.03 | 2.11 | 2.11 | 2.26 | 2.24 |
| ((a) lb. (b) Kg) | | | | | | | | |

[a] 3,000 m.w. propylene oxide/ethylene oxide adduct of glycerol made by Texaco Chemical Co.

[b] 3,000 m.w. epoxy resin-modified propylene oxide/ethylene oxide adduct of glycerol made by Texaco Chemical Co.

[c] 3,500 m.w. epoxy resin-modified propylene oxide/ethylene oxide adduct of glycerol made by Texaco Chemical Co.

[d] From Example 4

[e] From Example 2

[f] From Example 5

[g] From Example 3

[h] A product of Union Carbide Corporation

[i] Tertiary amine catalyst made by Union Carbide Corp.

[j] 50% stannous octoate in dioctyl phthalate made by M&T Chemicals

[k] Manual Model LIC compression tester manufactured by John Chatillon

It may be seen from Example 7 that foams made from the vinyl polymer polyols of this invention (Foams D, E, F, and G) have better load bearing properties (as shown by their Chatillon gauge readings) than a foam made from a conventional polyol (Foam A) or foams made from conventional epoxy resin-modified polyols (Foams B and C). The Chatillon gauge measures the number of pounds (Kg) it takes to indent a standard piece of foam by 25% in height.

## EXAMPLE 8

This example will show that the polymer polyols of this invention are more effective at raising the hardness of flexible foams than prior art polymer polyols. In these formulations, the tin catalyst level was adjusted to prepare all foams with the same degree of openess.

Formulations and foam properties are shown in the following table.

| Foam No. | H | I | J |
|---|---|---|---|
| THANOL F-3050 (20% polymer)[a] | 50 | – | – |
| THANOL F-3550 (20% polymer)[b] | – | 50 | – |
| THANOL F-3016 | 50 | 50 | 50 |
| NIAX 34-37[c] | – | – | 50 |
| Water | 3.5 | 3.5 | 3.5 |
| L-711 Silicone | 1.0 | 1.0 | 1.0 |
| NIAX A-200 Catalyst | 0.35 | 0.35 | 0.35 |
| T-10 Catalyst | 0.27 | 0.27 | 0.27 |
| Toluene diisocyanate | 46.4 | 45.4 | 46.8 |
| Isocyanate index | 1.1 | 1.1 | 1.1 |

Properties

| | | H | I | J |
|---|---|---|---|---|
| Density | | 28.0 | 26.9 | 27.7 |
| Chatillon gauge reading | a) | 4.98 | 4.94 | 4.86 |
| (25% indentation, a) lb | b) | 2.26 | 2.24 | 2.21 |
| b) Kg) | | | | |

[a]From Example 5

[b]From Example 3

[c]A conventional styrene/acrylonitrile copolymer polyol manufactured by Union Carbide Corp. containing approximately 18% polymer, considered comparable to the inventive polymer polyols.

From Example 8, it is discovered that foams made from the vinyl polymer polyols of this invention (Foams H and I) have greater load-bearing strength than a foam made using a conventional polymer polyol (Foam J).

Many modifications may be made in the polyurethane foams of this invention. For example, one skilled in the art may find that using a particular combination of vinyl monomers and epoxy resin-modified polyols, proportions thereof and certain reaction conditions give a polymer polyol which produces a polyurethane with especially advantageous properties.

CLAIMS:

1. A vinyl polymer polyol prepared by polymerizing at least one vinyl monomer in the presence of a polyol via a free radical reaction characterized in that the polyol is an epoxy resin-modified polyol.

2. A vinyl polymer polyol according to claim 1 characterized in that the vinyl monomer comprises styrene, acrylonitrile, methyl methacrylate, methyl acrylate, butadiene, or a mixture thereof.

3. A vinyl polymer polyol according to claim 1 characterized in that the vinyl monomer in the vinyl polymer polyol comprises a mixture of styrene and acrylonitrile in a mol ratio of 9:1 to 1:9.

4. A vinyl polymer polyol according to any preceding claim characterized in that the polymer loading thereof is from 5 to 50 wt%.

5. A vinyl polymer polyol according to any preceding claim characterized in that the epoxy resin-modified polyol has a molecular weight from 2000 to 7000.

6. A vinyl polymer polyol according to any preceding claim characterized in that the epoxy resin-modified polyol is made by reacting a polyol initiator having an active hydrogen functionality of 3 to 8 and one or more alkylene oxides with an epoxy resin in such a manner that the epoxy resin is added internally along the length of the resultant epoxy resin-modified polyol.

7.    A vinyl polymer polyol according to any preceding claim characterized in that the free radical reaction is initiated by an organic peroxide, peroxydicarbonate, peroxyester, 2,2'-azobis(2,4-dimethylpentanenitrile), 2,2'-azobis(2-methylpropanenitrile), 2,2'-azobis(2-methylbutanenitrile), 1,1'-azobis(cyanocyclohexane), or a mixture thereof, employed in a concentration of from 0.1 to 5.0% based on the total monomer and epoxy resin-modified polyol components.

8.    A vinyl polymer polyol according to any preceding claim characterized in that the free radical reaction is conducted at a temperature from 75 to 150°C and a pressure from atmospheric to 0.8 MPa.

9.    A method for making a polyurethane foam comprising reacting a polyol with an organic polyisocyanate in the presence of a polyurethane catalyst, and optionally in the presence of a blowing agent, characterized in that the polyol is a vinyl polymer polyol according to any of the preceding claims.